# EUROPEAN PATENT APPLICATION

(11) **EP 1 300 766 A2**
(43) Date of publication of application: **09.04.2003**
(21) Application number: 02256574.1
(22) Date of filing: 23.09.2002
(51) Int. Cl.: G06F 9/50

(54) **Method and apparatus for partitioning resources within a computer system**

(30) Priority: 25.09.2001 US 964148
(71) Applicant: Sun Microsystems, Inc., Santa Clara, California 95054 (US)
(72) Inventor: Hahn, Stephen C., Redwood City, CA 94062 (US); Marsland, Tim P., Half Moon Bay, CA (US)
(74) Representative: Davies, Simon Robert

(57) **Abstract**

A method and system are provided that partition computer system resources between concurrently executing workloads. The method and system operate by establishing a first resource pool that specifies requirements for different computer system resources. Next, the different computer system resources are allocated to one or more resource pools, including the first resource pool, to create a resource allocation, wherein requirements of the first resource pool are satisfied, and wherein resources allocated to the first resource pool can change over time. A first process is then bound to the first resource pool, so that the first process has access to the plurality of different computer system resources allocated to the first resource pool. In one particular embodiment, while allocating different computer system resources, the computer system resources are partitioned into one or more partitions, wherein a first partition is associated with a first resource and a second partition is associated with a second resource. The first partition is then allocated to a single resource pool, so that only processes associated with the single resource pool can access the first partition. At the same time, the second partition is allocated to multiple resource pools so that processes associated with the multiple resource pools can share the second partition.

## Description

### Field of the Invention

The present invention relates to allocating resources within a computing system, for example, between different concurrently executing workloads.

### Background of the Invention

The advent of computer networks has led to the development of server computer systems that perform computational operations on behalf of numerous client computer systems. These server computer systems are typically configured with large amounts of computing resources, such as processors and memory, and are typically employed in processing one or more concurrently executing computational workloads.

One challenge in designing an operating system to manage such a server is to ensure that computer system resources are allocated between computational workloads so that the minimum requirements of each workload are satisfied, and so that the workloads are collectively executed in an efficient manner.

Some modern computing systems provide support for partitioning a machine-wide resource into smaller sets and then associating one or more workloads with each of the sets. For example, the SOLARIS™ operating system, distributed by SUN Microsystems, Inc. of Palo Alto, California, allows processors to be grouped into processor sets, wherein specific processes may be bound to a specific processor set. In this way, the specific processes do not compete with other processes for access to the specific processor set.

However, these partitioning operations must presently be specified manually by a machine operator and are dependent upon the specific machine configuration, as well as the operator's awareness of resource requirements for excepted workloads. Furthermore, a given allocation of computer system resources is not persistent across machine failures.

Other operating systems have developed a mechanism for assembling a group of resources into a fixed "container" that processes can bind to in order to access the resources. However, resources within a fixed container cannot be flexibly changed over time to accommodate changing resource requirements for the various system workloads. Furthermore, resources cannot be shared between containers.

### Summary of the Invention

Accordingly, one embodiment of the present invention provides a system and method that allocate computer system resources between concurrently executing workloads. A first resource pool is established that specifies requirements for different computer system resources. Next, the different computer system resources are allocated to one or more resource pools, including the first resource pool, to create a resource allocation, wherein requirements of the first resource pool are satisfied, and wherein resources allocated to the first resource pool can change over time. A first process is then bound to the first resource pool, so that the first process has access to the plurality of different computer system resources allocated to the first resource pool. Such an approach therefore allows computer system resources to be allocated between different concurrently executing workloads.

In one particular embodiment of the present invention, while allocating different computer system resources, the computer system resources are partitioned into one or more partitions, wherein a first partition is associated with a first resource and a second partition is associated with a second resource. The first partition is then allocated to a single resource pool, so that only processes associated with the single resource pool can access the first partition. At the same time, the second partition is allocated to multiple resource pools so that processes associated with the multiple resource pools can share the second partition. In this way, non-critical resources can be shared, while other resources deemed critical to the successful execution of a workload are not shared.

In one embodiment of the present invention, prior to allocating the different computer system resources, it is verified that the collective requirements of the one or more resource pools can be satisfied. If the collective requirements cannot be satisfied, the system signals an error condition.

In one embodiment of the present invention, establishing the first resource pool involves selecting a file containing a representation of the first resource pool from a number of possible files.

In one embodiment of the present invention, a representation of the resource allocation is saved to non-volatile storage so that the resource allocation can be reused after a machine failure. This can be achieved, for example, by using an Extensible Markup Language (XML) representation of the resource allocation. One possibility is to store a representation of each of the one or more resource pools along with associated resources.

In one embodiment of the present invention, the first resource pool is associated with a first project, and the first process is one of a plurality of processes associated with the first project.

In one embodiment of the present invention, establishing the first resource pool involves establishing minimum and maximum requirements for a given resource.

In one embodiment of the present invention, the system dynamically adjusts the resource allocation during execution.

In one embodiment of the present invention, the different computer system resources can include, central processing units, semiconductor memory, swap space and networking resources.

### Brief Description of the Figures

Various preferred embodiments of the invention will now be described in detail, by way of example only, with reference to the following drawings, in which like reference numerals identify like elements:
FIG. 1 illustrates a distributed computing system in accordance with one embodiment of the present invention.
FIG. 2 illustrates how computer system resources are allocated to resource pools in accordance with one embodiment of the present invention.
FIG. 3 illustrates the structure of a resource pool in accordance with one embodiment of the present invention.
FIG. 4 illustrates how processes are associated with projects in accordance with one embodiment of the present invention.
FIG. 5 is a flow chart illustrating the process of setting up a resource allocation in accordance with one embodiment of the present invention.
FIG. 6 is a flow chart illustrating the process of storing a resource allocation to a file in accordance with one embodiment of the present invention.

### Detailed Description

### Distributed Computing System

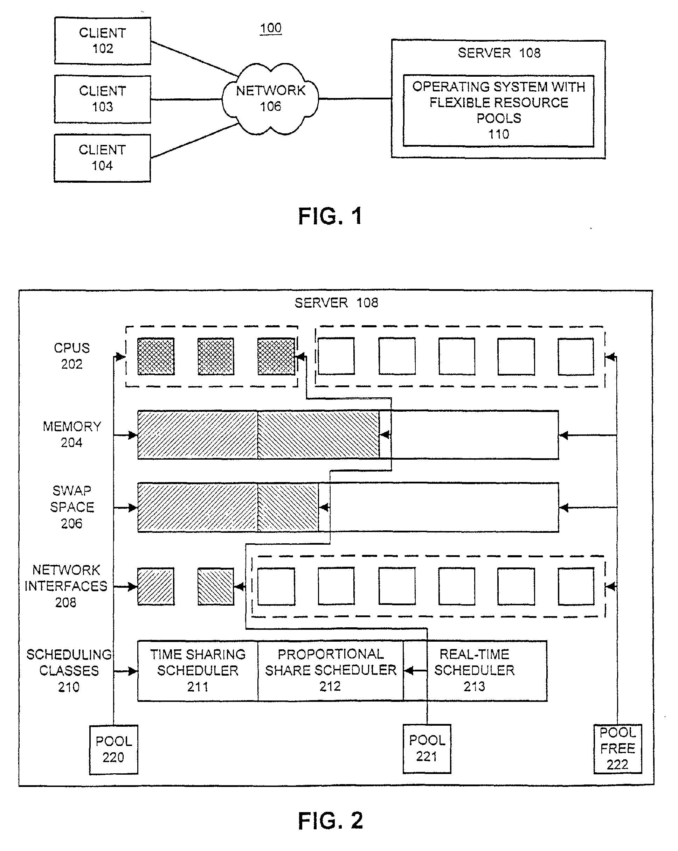

FIG. 1 illustrates a distributed computing system 100 in accordance with one embodiment of the present invention. Distributed computing system 100 includes a collection of client computing systems 102-104 that are coupled to a server computing system 108 through a network 106.

Clients 102-104 can generally include any device having computational capability and a mechanism for communicating across the network. Server 108 can generally include any computing device having a mechanism for servicing requests from clients 102-104 for computational and/or data storage resources. For example, clients 102-104 and server 108 may be a computer system based on a microprocessor, a mainframe computer, a digital signal processor, a portable computing device, a personal organizer, a device controller, a computational engine within an appliance, and so on.

Clients 102-104 and server 108 include central processing units (CPUs) that execute threads. Threads are entities that generate a series of execution requests, while CPUs are entities that can satisfy the execution requests.

Network 106 can generally include any type of wired or wireless communication channel capable of coupling together computing nodes. This includes, but is not limited to, a local area network, a wide area network, or a combination of networks. In one embodiment of the present invention, network 106 includes the Internet.

Server 108 includes an operating system 110 that supports flexible resource pools, which can be dynamically modified during system operation in accordance with an embodiment of the present invention.

Note that although the present invention is described in the context of a server computer system, it is not limited to a server computer system. In general, the present invention is applicable to any computer system that allocates computational resources to different computational workloads.

### Allocation of Resources to Pools

FIG. 2 illustrates how computer system resources are allocated to pools 220-222 in accordance with one embodiment of the present invention. As is illustrated in FIG. 2, server 108 contains various computational resources, including central processing units (CPUs) 202, memory 204, swap space 206, network interfaces 208 and scheduling classes 210. CPUs 202 include one or more CPUs within server 108. Note that it is possible to allocate an entire CPU to a pool, or alternatively, a fraction of a CPU. Memory 204 includes the main memory resources of server 108. Swap space 206 includes disk space that is used as a backing store for the virtual memory system of server 108. Network interfaces 208 include different channels for connecting server 108 with network 106. Note that network resources can alternatively be partitioned by allocating "available network bandwidth" instead of individual network interfaces.

Scheduling classes 210 are not actually system resources for which processes contend, but they can similarly be allocated to pools. For example, in FIG. 2, time-sharing scheduler 211 is assigned to pool 220, proportional share scheduler is assigned to pool 221 and real-time scheduler 212 is unassigned.

As is illustrated in FIG. 2, some of the resources within server 108 are allocated to pool 220, while other resources are allocated to pool 221. Note that both pool 220 and pool 221 share the same set of CPUs, while pools 220 and 221 do not share memory 204, swap space 206 or network interfaces 208. In this way, non-critical system resources can be shared, while other resources, deemed critical to a workload's successful execution, are not shared. This is an important advantage because sharing resources gives rise to more efficient resource utilization, which leads to better system performance.

As is illustrated in FIG. 2, server 108 also includes a "pool free" 222 allocation that contains system resources that are not assigned to specific pools.

### Structure of Resource Pool

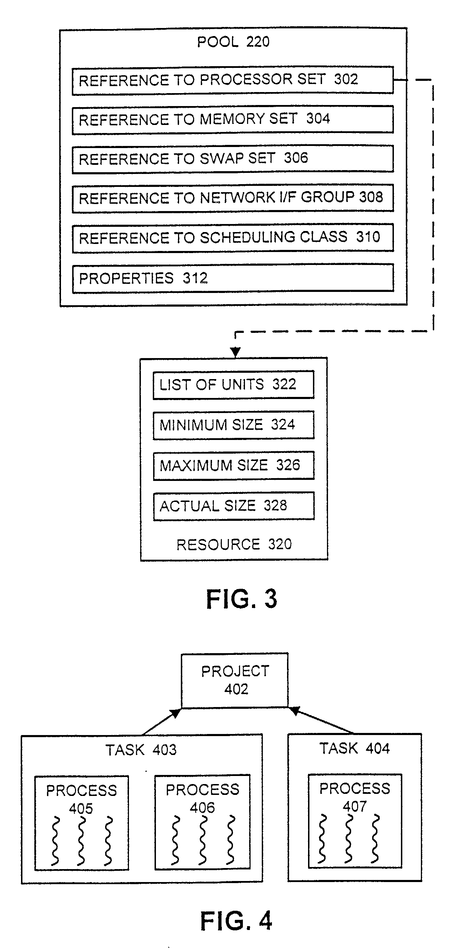

FIG. 3 illustrates the structure of resource pool 220 in accordance with one embodiment of the present invention. Resource pool 200 includes references to different resources, including a reference to a processor set 302, a reference to a memory set 304, a reference to a swap set 306, a reference to a network interface group 308 and a reference to a scheduling class 310. These references keep track of the associations between pool 220 and its resources. These references are indicated by arrows in FIG. 2.

Each of there references points to a resource data structure. For example, the reference to processor set 302 points to resource data structure 320. Resource data structure 320 includes a number of items, including a list of the processor units 322 assigned to the resource. (Note that this list of units field only applies to certain resources, such as processors, that are allocated in discrete units. For other resources that are allocated as a range, such as memory, this field is not used). Resource 320 also includes a minimum size 324 to be allocated for the resource, as well as a maximum size 326 to be allocated for the resource. These minimum and maximum sizes are used by the system to automatically adjust the allocations assigned to resource 320 during system operation. Resource 320 also includes the actual size 328 of the allocation. Note that actual size 328 generally falls in the range from minimum size 324 to maximum size 326.

Note that pool 220 also includes certain properties 312 of the pool. For example, one of the properties can be "importance" of the pool. If each of the pools includes an importance value, the system can use these importance values in adjusting the allocation of resources to pools. In doing so, the system can give preference to pools with higher importance values.

### Processes and Projects

FIG. 4 illustrates how processes are associated with projects in accordance with one embodiment of the present invention. As is illustrated in FIG. 4, one or more tasks 403-404 are associated with a given project 402. Each of these tasks includes one or more processes. More specifically, task 403 includes processes 405 and 405, while task 404 includes process 407. Furthermore, each of these processes 405-407 can contain multiple threads (also referred to as light-weight processes). Note that when project 402 is associated with a resource pool, all of the associated processes 405-407 are associated with the same pool.

This project/task/process structure can be used to represent some types of applications. For example, project 402 may be associated with a database system, wherein tasks 403-404 are associated with specific components of the database system. Within the database system, processes 405-407 are dedicated to performing the actions involved in executing the specific components.

### Process of Setting Up a Resource Allocation

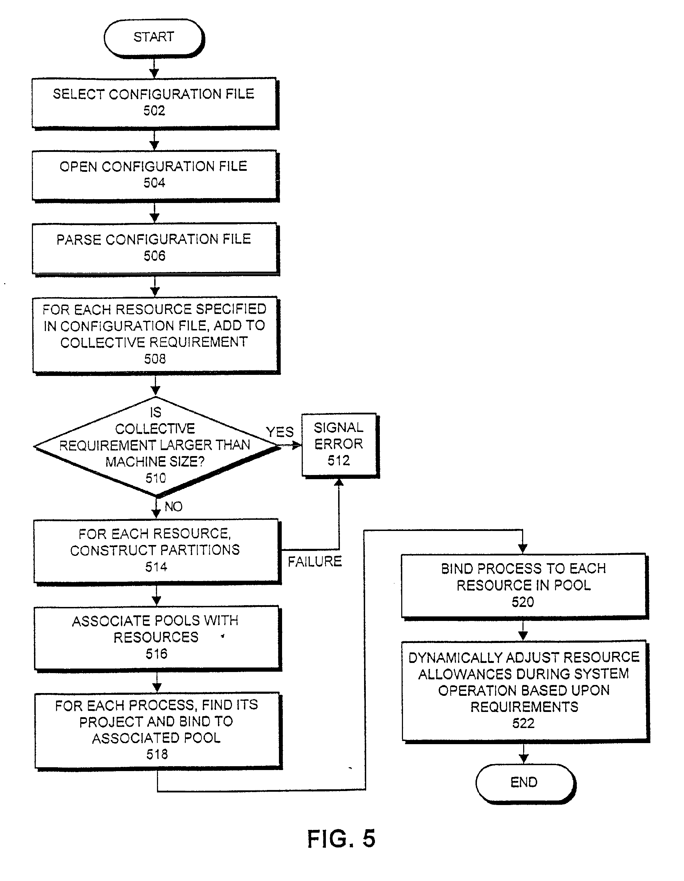

FIG. 5 is a flow chart illustrating the process of setting up a resource allocation in accordance with one embodiment of the present invention. The system starts by selecting a file in non-volatile storage containing configuration information (step 502). Note that this file can be one of a number of different possible files containing resource allocation information for the computer system. In one embodiment of the present invention, configuration information within this file is encoded in extensible markup language (XML) format.

Next, the system opens the file (step 504) and then parses the configuration information to extract the configuration (step 506). For each resource requirement for a pool that is specified in the file, the system adds the minimum resource requirement to a collective requirement (step 508). The system then determines if the collective requirement is larger than the machine size (step 510). If so, the system signals an error condition and terminates because the collective requirement cannot be satisfied by the system (step 512).

Otherwise, if the collective requirement not larger than the machine size, the system constructs partitions for each resource that is specified in the file (step 514). This can be accomplished by first meeting the minimum requirements for each pool, and then using a card dealing algorithm to dole out additional resources. If the system fails during this partitioning process, the system signals an error condition and terminates (step 512).

Once the resources are successfully partitioned, the system associates pools with the partitions (step 516). The system then binds each process to a specific pool that is associated with the process (step 518). In one embodiment of the present invention, this involves looking up a project that is associated with the process, and then looking up the pool that is associated with the project. Next, the system binds the process to each resource within the pool (step 520).

Note that this allocation of resources to processes is merely an initial allocation. This allocation can change over time as the system dynamically adjusts resource allocations based upon changing workload requirements (step 522).

### Process of Storing a Resource Allocation

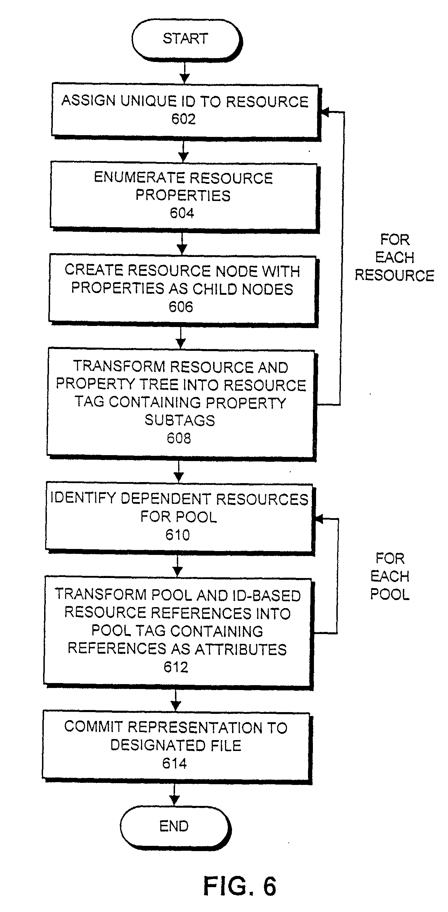

FIG. 6 is a flow chart illustrating the process of storing a resource allocation to a file in accordance with one embodiment of the present invention. (Note that although the system illustrated uses an XML representation for resources and pools, in general any representation can be used, and the present invention is not limited to an XML representation).

The system processes each resource in turn. For each resource, the system assigns a unique identifier to the resource (step 602), and then enumerates properties of the resource (step 604). Next, the system creates a resource node with properties as child nodes (step 606). The system then transforms this resource-property tree into an XML tag containing property sub-tags (step 608).

Next, the system processes each pool in turn. For each pool, the system identifies dependent resources by a unique identifier (step 610). The system then transforms the pool, along with ID-based resource references, into an XML pool tag containing references as attributes (step 612).

Next, the system commits the XML representation of the resources and the pools to a designated file (step 614). This allows the resources and pools to be reconstituted after a system failure.

After the configuration file is created, the system administrator can replicate the configuration file across multiple machines in order to guarantee a stable configuration. There may be some minor edits required (e.g. CPU names may differ, board names may differ), but the configuration is largely stable and very portable. Also, the configuration is persistent across reboots.

Furthermore, note that the configuration can be easily amended with small edits, such as altering the maximum amount of resource in a set, or major edits, such as the complete removal of all pools on the system.

Moreover, the above-described model is flexible. A system administrator may choose to bind multiple pools to a single resource, or may bind only one pool to a partition and thus provide guaranteed control of the partition for a pool. The system administrator may even leave a resource completely unutilized by associating no pools with the partition, thereby leaving the resource as an "emergency standby partition".

With the above-described model, shifting workload is very easy. It simply involves associating the pool with a different set of resources. Furthermore, one or multiple resource sets may be changed, and the resource sets can be changed many times over the lifetime of the pool.

Additionally, since the configuration document is XML, the configuration can be transformed into alternative formats easily, and can thus be re-used by an XML-aware application that requires pool-related information. For instance, a pool monitoring application can read the dynamic XML configuration file and report the current configuration as an HTML document or as a standard output text file.

### Example Configuration File

The sample configuration file that appears below illustrates how resources and pools for a particular host can be represented in XML. Elements that contain other elements (for instance, processor_rset contains cpu) represent a containment relationship between those elements. Also, there are association relationships, which represent relationships where elements require access to an uncontained element. For instance, pool elements have a resource_processor_rset attribute which references a defined processor_rset element.

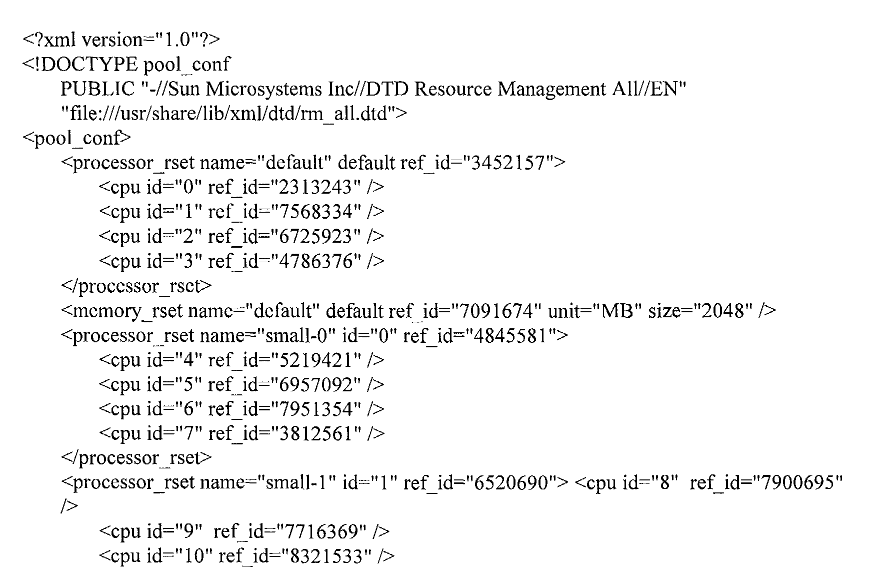

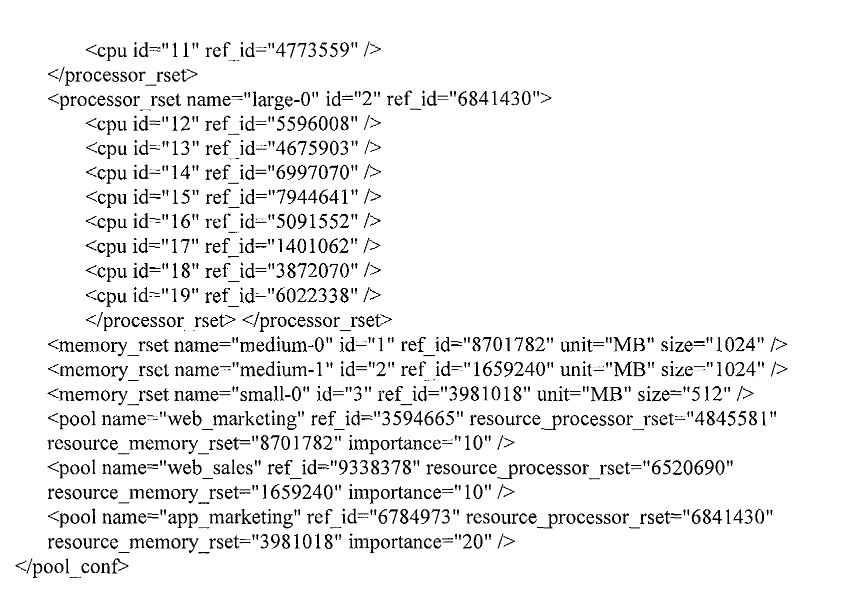

Note that the data structures and code described herein are typically stored on a computer readable storage medium, which may be any device or medium that can store code and/or data for use by a computer system. This includes, but is not limited to, magnetic and optical storage devices such as disk drives, magnetic tape, CDs (compact discs) and DVDs (digital versatile discs or digital video discs), and computer instruction signals embodied in a transmission medium (with or without a carrier wave upon which the signals are modulated). For example, the transmission medium may include a communications network, such as the Internet.

In conclusion, it will be appreciated that the different embodiments described above are by way of illustration only, and not by way of limitation. Thus various modifications and adaptations of these embodiments will be apparent to the skilled person, and remain within the scope of the invention as specified by the following claims and their equivalents.

## Claims

1. A method for allocating computer system resources between concurrently executing workloads, comprising:
establishing a first resource pool that specifies requirements for each of a plurality of different computer system resources;
allocating the plurality of different computer system resources to one or more resource pools, including the first resource pool, to create a resource allocation, wherein the requirements of the first resource pool are satisfied, and wherein resources allocated to the first resource pool can change over time; and
binding a first process to the first resource pool, so that the first process has access to the plurality of different computer system resources allocated to the first resource pool.

2. The method of claim 1, wherein allocating the plurality of different computer system resources to one or more resource pools involves:
partitioning each of the plurality of different computer system resources into one or more partitions, wherein a first partition is associated with a first resource and a second partition is associated with a second resource;
allocating the first partition to a single resource pool, so that only processes associated with the single resource pool can access the first partition; and
allocating the second partition to multiple resource pools so that processes associated with the multiple resource pools can share the second partition.

3. The method of claim 1 or 2, wherein prior to allocating the plurality of different computer system resources, the method further comprises:
verifying that collective requirements of the one or more resource pools can be satisfied; and
if the collective requirements cannot be satisfied, signaling an error condition.

4. The method of any preceding claim, wherein establishing the first resource pool involves selecting a file containing a representation of the first resource pool from a plurality of possible files.

5. The method of any preceding claim, further comprising storing a representation of the resource allocation to non-volatile storage so that the resource allocation can be reused after a machine failure.

6. The method of claim 5, wherein storing the representation of the resource allocation involves storing a representation of each of the one or more resource pools along with associated resources.

7. The method of claim 5 or 6, wherein storing the representation of the resource allocation involves storing an Extensible Markup Language (XML) representation of the resource allocation.

8. The method of any preceding claim,
wherein the first resource pool is associated with a first project; and
wherein the first process is one of a plurality of processes associated with the first project.

9. The method of any preceding claim, wherein establishing the first resource pool involves establishing minimum and maximum requirements for a given resource.

10. The method of any preceding claim, further comprising dynamically adjusting the resource allocation during system execution.

11. The method of any preceding claim, wherein the plurality of different computer system resources can include:
central processing units;
semiconductor memory;
swap space; and
networking resources.

12. A computer-readable storage medium storing instructions that when executed by a computer cause the computer to perform a method for allocating computer system resources between concurrently executing workloads, the method comprising:
establishing a first resource pool that specifies requirements for each of a plurality of different computer system resources;
allocating the plurality of different computer system resources to one or more resource pools, including the first resource pool, to create a resource allocation, wherein requirements of the first resource pool are satisfied, and wherein resources allocated to the first resource pool can change over time; and
binding a first process to the first resource pool, so that the first process has access to the plurality of different computer system resources allocated to the first resource pool.

13. An apparatus that allocates computer system resources between concurrently executing workloads, comprising:
an establishment mechanism that is configured to establish a first resource pool that specifies requirements for each of a plurality of different computer system resources;
an allocation mechanism that is configured to allocate the plurality of different computer system resources to one or more resource pools, including the first resource pool, to create a resource allocation, wherein the requirements of the first resource pool are satisfied, and wherein resources allocated to the first resource pool can change over time; and
a binding mechanism that is configured to bind a first process to the first resource pool, so that the first process has access to the plurality of different computer system resources allocated to the first resource pool.

14. The apparatus of claim 13, wherein the allocation mechanism is configured to:
partition each of the plurality of different computer system resources into one or more partitions, wherein a first partition is associated with a first resource and a second partition is associated with a second resource;
allocate the first partition to a single resource pool, so that only processes associated with the single resource pool can access the first partition; and to
allocate the second partition to multiple resource pools so that processes associated with the multiple resource pools can share the second partition.

15. The apparatus of claim 13 or 14, wherein the apparatus additionally includes a verification mechanism that is configured to verify that collective requirements of the one or more resource pools can be satisfied;
wherein if the collective requirements cannot be satisfied, the verification mechanism is configured to signal an error condition.

16. The apparatus of any of claims 13 to 15, wherein the establishment mechanism is configured to select a file containing a representation of the first resource pool from a plurality of possible files.

17. The apparatus of any of claims 13 to 16, further comprising an archiving mechanism that is configured to store a representation of the resource allocation to non-volatile storage so that the resource allocation can be reused after a machine failure.

18. The apparatus of claim 17, wherein the archiving mechanism is configured to store a representation of each of the one or more resource pools along with associated resources.

19. The apparatus of claim 17 or 18, wherein the archiving mechanism is configured to store an Extensible Markup Language (XML) representation of the resource allocation.

20. The apparatus of any of claims 13 to 19,
wherein the first resource pool is associated with a first project; and
wherein the first process is one of a plurality of processes associated with the first project.

21. The apparatus of any of claims 13 to 20, wherein the establishment mechanism is configured to establish minimum and maximum requirements for a given resource.

22. The apparatus of any of claims 13 to 21, further comprising an adjustment mechanism that is configured to dynamically adjust the resource allocation during system execution.

23. The apparatus of any of claims 13 to 22, wherein the plurality of different computer system resources can include:
central processing units;
semiconductor memory;
swap space; and
networking resources.

24. A computer program comprising instructions that when executed by a computer cause it to perform the method of any of claims 1 to 11.
